# EUROPÄISCHE PATENTSCHRIFT

(11) **EP 2 195 190 B1**
(45) Veröffentlichungstag und Bekanntmachung des Hinweises auf die Patenterteilung: **15.05.2013**
(21) Anmeldenummer: 08785707.4
(22) Anmeldetag: 27.08.2008
(51) Int. Cl.: B60N 2/48

(54) **KOPFSTÜTZE FÜR EIN FAHRZEUG**
HEAD REST FOR A VEHICLE
APPUIE-TÊTE POUR VÉHICULE

(30) Priorität: 31.08.2007 DE 102007041520
(43) Veröffentlichungstag der Anmeldung: 16.06.2010
(73) Patentinhaber: Johnson Controls GmbH, 51399 Burscheid (DE)
(72) Erfinder: FRÖSE, Ernst-Otto, 42699 Solingen (DE); DILLINGER, Thomas, 42929 Wermelskirchen (DE); HASLER, Alexander, 40219 Düsseldorf (DE)
(74) Vertreter: Schwöbel, Thilo K.
(86) Internationale Anmeldenummer: PCT/EP2008/007005
(87) Internationale Veröffentlichungsnummer: WO 2009/030408

(56) Entgegenhaltungen:
- DE-A1- 3 900 495
- DE-A1- 19 923 909
- DE-B3-102004 016 474
- DE-B3-102006 001 143
- DE-C1- 19 941 712

## Beschreibung

Die Erfindung betrifft eine Kopfstütze für einen Fahrzeugsitz, bei welcher zumindest ein dem Kopf des Sitzinsassen zugewandtes Teilstück der Kopfstütze unfallbedingt unter der Wirkung einer Antriebseinrichtung aus einer Gebrauchsstellung zum Kopf des Sitzinsassen hin in eine Sicherheitsstellung verlagerbar ist.

### Stand der Technik

Aus der Druckschrift DE 199 23 909 A1 ist eine Kopfstütze bekannt, die aus einem mit der Rückenlehne des Fahrzeugsitzes über Haltestangen starr, gegebenenfalls auch höhenverstellbar verbundenen Grundkörper besteht, der in einem wannenartig ausgebildeten Polstersegment angeordnet ist. Bei einem Unfall wird das Polstersegment translatorisch zum Kopf des Sitzinsassen hin bewegt, um einem Schleudertrauma vorzubeugen. Die hierzu erforderliche Kraft wird durch eine in Verschieberichtung vorgespannte Feder innerhalb einer teleskopartigen Führungseinrichtung erzeugt. In der Offenlegungschrift DE 39 00 495 A1 wird eine weitere Kopfstütze beschrieben, bei welcher ein Polstersegment unfallbedingt gegenüber dem Grundkörper um eine feste Drehachse nach vorne schwenkbar ist. Als Antriebseinrichtung dient eine federbelastete Kolben/Zylinderanordnung in Verbindung mit einem Stützhebel, bei welcher der die Kolbenstange im Bereich der Drehachse am Grundkörper und der Zylinder am Polstersegment angelenkt ist. Aus der Druckschrift DE 199 41 712 C1 ist ferner eine Kopfstütze bekannt, bei welcher ein verlagerbares Polsterelement mit dem Grundkörper über einen Scherenmechanismus verbunden ist, mittels dessen das Polsterelement aus einer Ruhestellung nach vorne in eine Gebrauchsstellung bewegbar ist. Eine gattungsgemäße Kopfstütze ist aus der Druckschrift DE 10 2004 016 474 B3 bekannt. Hierbei werden Teilstücke der Kopfstütze teleskopartig auseinanderbewegt, um eine Sicherheitsstellung der Kopfstütze einzunehmen.

Der Erfindung liegt die Aufgabe zugrunde, eine Kopfstütze mit einer einfach sowie kompakt aufgebauten, leichtgängigen und wirkungsvollen Antriebseinrichtung bereitzustellen.

Die Aufgabe wird gelöst durch eine Kopfstütze für einen Fahrzeugsitz, bei welcher zumindest ein dem Kopf des Sitzinsassen zugewandtes erstes Teilstück der Kopfstütze unfallbedingt unter der Wirkung einer Relativbewegung eines im wesentlichen zwischen dem ersten Teilstück und einem dritten Teilstück angeordneten zweiten Teilstücks der Kopfstütze aus einer Gebrauchsstellung zum Kopf des Sitzinsassen hin entlang einer Verlagerungsrichtung in eine Sicherheitsstellung verlagerbar ist, wobei die Relativbewegung der Teilstücke eine Drehung um eine zur Verlagerungsrichtung im wesentlichen parallele Drehachse ist, wobei bei der Relativbewegung um die Drehachse eine Lagerung des ersten Teilstücks gegenüber dem zweiten Teilstücks vorgesehen ist, wobei das erste Teilstück eine erste Lagerfläche und das zweite Teilstück eine zweite Lagerfläche aufweist. Hierbei ist eine besonders leichtgängige Realisierung einer erfindungsgemäßen Kopfstütze möglich. Insbesondere ist es dadurch möglich, die Lagerung für das erste Teilstück zu vereinfachen und erheblich leichtgängiger zu gestalten.

Erfindungsgemäß ist es bevorzugt, dass im Bereich der ersten und zweiten Lagerfläche ein Wälzlager vorgesehen ist, wobei das Wälzlager insbesondere einen einen Wälzkörper aufweisenden Lagerkäfig umfasst, bzw. dass der Lagerkäfig entlang der Drehachse eine Erstreckung in der Größenordnung der Verschiebung des ersten Teilstücks zwischen der Gebrauchsstellung und der Sicherheitsstellung aufweist. Hierdurch kann eine besonders große Leichtgängigkeit der Lagerung insbesondere des ersten Teilstücks relativ zum zweiten Teilstück trotz der Bewegung des ersten Teilstücks in die Verlagerungsrichtung erzielt werden.

Weiterhin ist es erfindungsgemäß bevorzugt, dass das erste Teilstück wenigstens eine erste Schrägfläche und das zweite Teilstück wenigstens eine zweite Schrägfläche aufweist bzw. dass das dritte Teilstück wenigstens eine dritte Schrägfläche und das zweite Teilstück wenigstens eine vierte Schrägfläche aufweist, wobei wenigstens ein Teil der Schrägflächen im wesentlichen helixförmig um die Drehachse verlaufen und bei einer Relativbewegung des zweiten Teilstücks um die Drehachse eine Bewegung des ersten bzw. zweiten Teilstücks entlang der Verlagerungsrichtung bewirken. Hierdurch kann zum einen eine besonders wirkungsvolle Umsetzung der rotatorischen Bewegung des zweiten Teilstücks in eine translatorische Bewegung des ersten Teilstücks bewirkt werden und zum anderen kann durch die Bereitstellung von zwei Schrägflächenpaarungen (nämlich zwischen dem ersten Teilstück und dem zweiten Teilstück einerseits und zwischen dem zweiten Teilstück und dem dritten Teilstück andererseits) bei gleichem Drehwinkel der Rotationsbewegung des zweiten Teilstücks eine Vergrößerung der Translationsbewegung des ersten Teilstücks in die Verlagerungsrichtung durch eine gegenläufige Anordnung der Schrägflächenpaarungen bewirkt werden.

Erfindungsgemäß ist es ferner bevorzugt, wenn die Lagerung des ersten Teilstücks gegenüber dem zweiten Teilstücks mittels einer Zentrallagerung vorgesehen ist, wobei die erste Lagerfläche eine äußere Lagerfläche ist, wobei die zweite Lagerfläche eine innere Lagerfläche ist und wobei insbesondere die erste und zweite Lagerfläche mit Bezug zur Drehachse radial innenliegend gegenüber der ersten und zweiten Schrägfläche und/oder gegenüber der dritten und vierten Schrägfläche vorgesehen ist. Hierdurch ist eine besonders stabile und in allen Betriebsarten bzw. Betriebssituationen leichtgängige und damit den Sicherheitsanforderungen entsprechende Bewegung der Kopfstütze bzw. der Teile der Kopfstütze möglich.

Gemäß der vorliegenden Erfindung ist es ferner bevorzugt, dass eine beidseitige Wirkung der ersten und zweiten Schrägflächen und/oder eine beidseitige Wirkung der dritten und vierten Schrägflächen vorgesehen ist. Hierdurch ist es möglich, dass im wesentlichen jeder translatorischen Einstellung des ersten Teilstücks der Kopfstütze eine vergleichsweise gut definierte rotatorische bzw. rotatorische und translatorische Einstellung des zweiten Teilstücks der Kopfstütze entspricht. Insbesondere ist es hierdurch erfindungsgemäß möglich, dass die Kopfstütze in einfacher Weise nach einer Auslösung (d.h. nach der Einstellung der Sicherheitsstellung) wieder zurückgestellt werden kann.

Erfindungsgemäß ist es ferner bevorzugt, wenn eine Blockiereinrichtung zur Blockierung oder Verringerung einer Bewegung des ersten Teilstücks der Kopfstütze entgegen der Verlagerungsrichtung vorgesehen ist, wobei die Blockiereinrichtung eine Verzahnung im Bereich der dritten Schrägfläche und der vierten Schrägfläche aufweist. Hierdurch wird ein einfacher und dennoch sicherer Weise eine Blockiermöglichkeit derart geschaffen, dass nach einer Auslösung des Sicherheitsmechanismus der Kopfstütze das erste Teilstück nicht mehr oder zumindest nicht mehr wesentlich zurück in Richtung der Gebrauchsstellung verschoben wird.

Erfindungsgemäß ist ferner bevorzugt, dass die Blockiereinrichtung wenigstens eine Federeinrichtung aufweist, wobei die Federeinrichtung im Normalfall einen Eingriff der Verzahnung bewirkt, bzw. dass das zweite Teilstück ein Komfortteilstück und ein Sicherheitsteilstück aufweist, wobei mittels einer Drehung des Komfortteilstücks um die Drehachse ausgehend von der Gebrauchsstellung oder ausgehend von einer Komfortstellung eine Bewegung des ersten Teilstücks entlang der Verlagerungsrichtung vorgesehen ist und wobei mittels einer Drehung des Sicherheitsteilstücks um die Drehachse eine zumindest teilweise Mitbewegung des Komfortteilstücks und eine Bewegung des ersten Teilstücks entlang der Verlagerungsrichtung vorgesehen ist. Hierdurch ist es erfindungsgemäß möglich, dass eine Komforteinstellung der Kopfstütze in horizontaler Richtung, d.h. eine Verschiebung des ersten Teilstücks in Verlagerungsrichtung zu Komfortzwecken in einfacher Weise möglich ist.

Die Figuren stellen beispielhaft und schematisch verschiedene Ausführungen der Erfindung dar.

Es zeigen:
Figur 1 einen Fahrzeugsitz mit einer Kopfstütze,
Figuren 2a bis 2d Schnitte durch eine in die Kopfstütze einsetzbare Antriebseinrichtung in unterschiedlichen Funktionsstellungen,
Figuren 3 bis 16 verschiedene Ausführungsformen bzw. Details der erfindungsgemäßen Kopfstütze.

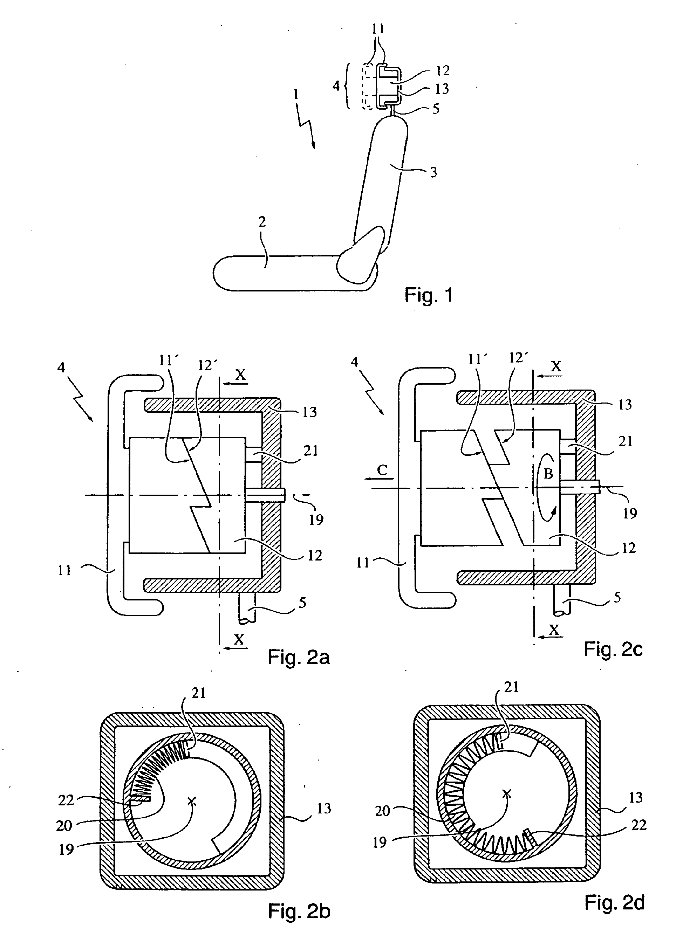

Gemäß der Figur 1 umfasst ein erfindungsgemäßer Fahrzeugsitz 1 bzw. ein mit einer erfindungsgemäßen Kopfstütze 4 ausgestatteter Fahrzeugsitz 1 ein Sitzteil 2 und eine mit diesem insbesondere neigungsverstellbar verbundenen Rückenlehne 3, welche mit der Kopfstütze 4 ausgestattet ist. Paarige Haltestangen 5 können zur Befestigung der Kopfstütze an der Rückenlehne 3 vorgesehen sein. Es können jedoch auch alternativ andere Befestigungsmöglichkeiten (nicht dargestellt) zwischen der Rückenlehne 3 und der Kopfstütze 4 vorgesehen sein. Die paarigen Haltestangen 5 der Kopfstütze 4 können im oberen Bereich der Rückenlehne 3 oder im Bereich der Kopfstütze 4 über ein Gelenk (nicht dargestellt) mit der Rückenlehne 3 bzw. mit der Kopfstütze 4 schwenkbar verbunden sein. Die Kopfstütze 4 weist erfindungsgemäß wenigstens ein dem Kopf des Sitzinsassen zugewandtes erstes Teilstück 11 der Kopfstütze 4 auf, das unfallbedingt unter der Wirkung einer Relativbewegung eines im wesentlichen zwischen dem ersten Teilstück 11 und einem dritten Teilstück 13 angeordneten zweiten Teilstücks 12 der Kopfstütze 4 aus einer Gebrauchsstellung (mit durchgezogener Linie in Figur 1 gezeichnet) zum Kopf des Sitzinsassen hin entlang einer Verlagerungsrichtung in eine Sicherheitsstellung (mit gestricheiter Linie in Figur 1 gezeichnet) verlagerbar ist. Bei dem ersten Teilstück 11 handelt es sich insbesondere um ein Polsterelement, an welches der Kopf des Sitzinsassen angelegt bzw. abgestützt werden kann. Bei dem dritten Teilstück 13 der Kopfstütze 4 handelt es sich insbesondere um einen Grundkörper der Kopfstütze 4, der über die Haltestangen 5 starr oder auch höhen und/oder neigungsverstellbar mit der Rückenlehne 3 verbunden ist. Innerhalb der Kopfstütze 4 ist zwischen dem ersten Teilstück 11 und dem dritten Teilstück 13 eine nachfolgend im Einzelnen beschriebene und das zweite Teilstück 12 aufweisenden Antriebseinrichtung angeordnet, welche die Verlagerung des ersten Teilstücks 11 in einer Bewegungsrichtung C auf den Kopf des Sitzinsassen hin bewirkt.

Gemäß der Figuren 2a bis 2d ist die Relativbewegung der Teilstücke 11, 12, 13 der erfindungsgemäßen Kopfstütze 4 in schematischer Weise näher dargestellt. Hierbei zeigen die Figuren 2a und 2b den Zustand der Kopfstütze in der Gebrauchsstellung und die Figuren 2c und 2d den Zustand der Kopfstütze in der Sicherheitsstellung (Verlagerung des ersten Teilstücks 11 in Richtung auf den Sitzinsassen zu, Bewegungsrichtung C), wobei die Figur 2b eine vordere Schnittdarstellung der in Figur 2a in einer seitlichen Schnittdarstellung abgebildeten Kopfstütze 4 gemäß der Schnittlinie X-X der Figur 2a darstellt und wobei die Figur 2d eine vordere Schnittdarstellung der in Figur 2c in einer seitlichen Schnittdarstellung abgebildeten Kopfstütze 4 gemäß der Schnittlinie X-X der Figur 2c darstellt. Die Antriebseinrichtung umfasst das zweite Teilstück 12 der Kopfstütze 4, das um eine Drehachse 19 drehbar mit dem dritten Teilstück 13 bzw. Grundkörper der Kopfstütze 4 verbunden ist. Eine im Bereich zwischen zwei Angriffspunkten 21 und 22 lediglich schematisch dargestellte vorgespannte Feder 20 ist - je nach Vorspannung - entweder in der Lage, nach Lösung einer nicht dargestellten Verriegelungseinrichtung eine Bewegung von der Gebrauchsstellung in die Sicherheitsstellung zu bewirken oder aber eine Bewegung von der Sicherheitsstellung in die Gebrauchsstellung zu bewirken. Bei einem Unfall (Fig. 2c, Fig. 2d) wird das zweite Teilstück 12 gegenüber dem dritten Teilstück 13 verdreht (Pfeil B). Aufeinander reibende Schrägflächen zwischen dem ersten Teilstück 11 und dem zweiten Teilstück 12 und/oder zwischen dem zweiten Teilstück 12 und dem dritten Teilstück 13 bewirken dabei eine axiale Kraft und eine Vorverlagerung des ersten Teilstücks 11 parallel zur Richtung der Drehachse 19 in Richtung des Pfeiles C (Verlagerungsrichtung). Die mit 11' bzw. 12' bezeichneten und zueinander weisenden Stirnflächen des ersten Teilstücks 11 (nachfolgend auch als erste Schrägflächen 11' bezeichnet) bzw. des zweiten Teilstücks 12 (nachfolgend auch als zweite Schrägflächen 12' bezeichnet) sind erfindungsgemäß als Schrägflächen derart ausgebildet, dass die rotative Bewegung des zweiten Teilstücks 12 in eine translative Bewegung des ersten Teilstücks 11 übersetzt wird. Eine Blockiereinrichtung kann erfindungsgemäß an dieser Stelle (d.h. zwischen den ersten und zweiten Schrägflächen 11' 12') derart vorgesehen sein, dass ein Teil oder alle dieser ersten und zweiten Schrägflächen 11' 12' mit - beispielsweise sägezahnartigen - Verzahnungen ausgestattet sind, die eine Blockierung des ersten Teilstücks 11 in seiner ganz oder teilweise gemäß der Bewegungsrichtung C ausgefahrenen Lage ermöglichen, wenn auf das erste Teilstück 11 eine dieses in die Gebrauchsstellung zurückbewegende Kraft (beispielsweise nach oder während eines Unfalls ausgehend von dem Kopf des Fahrzeuginsassen) wirkt. Dritte und vierte Schrägflächen (in den Figuren 2a bis 2d nicht dargestellt) können entweder alternativ oder kumulativ zu ihrer Anordnung zwischen dem ersten Teilstück 11 und dem zweiten Teilstück 12 auch zwischen dem zweiten Teilstück 12 und dem dritten Teilstück 13 vorgesehen sein und alternativ oder kumulativ zu der Blockiereinrichtung im Bereich der ersten und zweiten Schrägflächen 11' 12' eine ähnlich aufgebaute Blockiereinrichtung aufweisen.

Gemäß der vorliegenden Erfindung ist es entweder möglich, dass die Verlagerung in Verlagerungsrichtung C des ersten Teilstücks 11 ausschließlich im Falle eines Unfalls erfolgt und somit außer der Gebrauchsstellung lediglich die Sicherheitsstellung des ersten Teilstücks 11 möglich ist, oder es ist alternativ dazu möglich, dass die Verlagerung des ersten Teilstücks 11 in Verlagerungsrichtung C nicht nur in einer Unfallsituation, sondern auch für Komfortzwecke auf Wunsch eines Benutzers möglich ist. Erfindungsgemäß kann es in dieser zweiten Alternative vorgesehen sein, dass sich ausgehend von der Gebrauchsstellung der Verlagerungsweg in Verlagerungsrichtung für Komfortzwecke und der Verlagerungsweg zur Einstellung der Sicherheitsstellung vollständig überlappen oder dass entweder der Verlagerungsweg für Komfortzwecke größer ist als für Sicherheitszwecke oder umgekehrt der Verlagerungsweg für Komfortzwecke kleiner ist als für Sicherheitszwecke. Im nachfolgend ausgeführten Ausführungsbeispiel ist die Verlagerung des ersten Teilstücks 11 in Verlagerungsrichtung C nicht nur in einer Unfallsituation, sondern auch für Komfortzwecke auf Wunsch eines Benutzers möglich und es überlappen sich der Verlagerungsweg in Verlagerungsrichtung für Komfortzwecke und der Verlagerungsweg zur Einstellung der Sicherheitsstellung vollständig. Dies ist kann erfindungsgemäß beispielsweise derart realisiert sein, dass das zweite Teilstück 12 ein Komfortteilstück 122 und ein Sicherheitsteilstück 123 aufweist, wobei mittels einer Drehung des Komfortteilstücks 122 um die Drehachse 19 ausgehend von der Gebrauchsstellung oder ausgehend von einer Komfortstellung eine Bewegung des ersten Teilstücks 11 entlang der Verlagerungsrichtung C vorgesehen ist und wobei mittels einer Drehung des Sicherheitsteilstücks 123 um die Drehachse 19 eine zumindest teilweise Mitbewegung des Komfortteilstücks und eine Bewegung des ersten Teilstücks 11 entlang der Verlagerungsrichtung C vorgesehen ist. Der einfacheren Darstellung wegen ist jedoch in den Figuren 2a bis 2d weder das Sicherheitsteilstück 123 noch das Komfortteilstück 122 einzeln dargestellt.

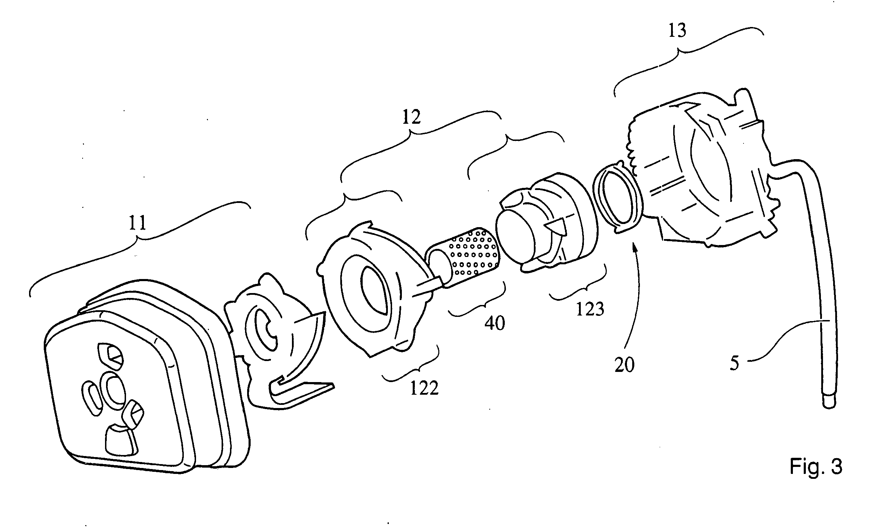

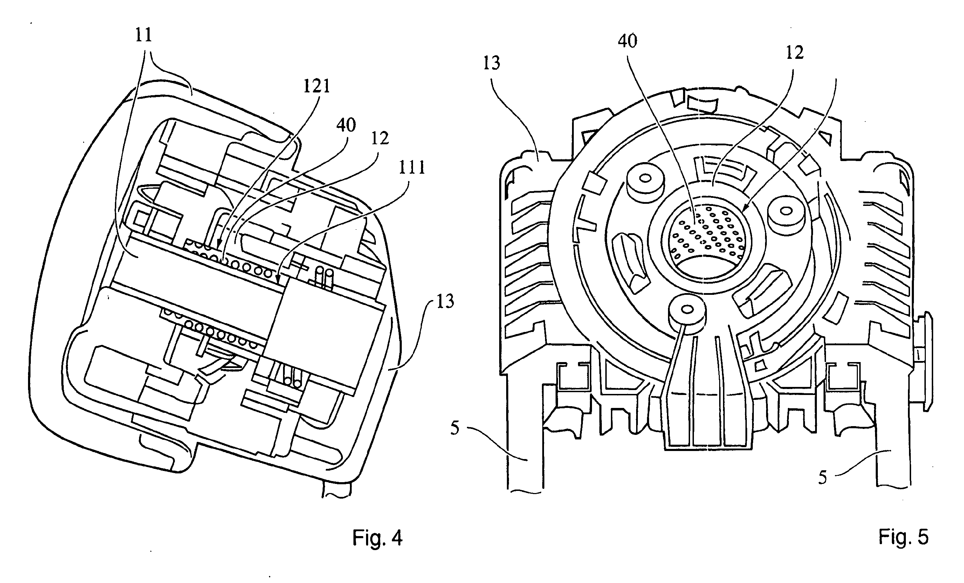

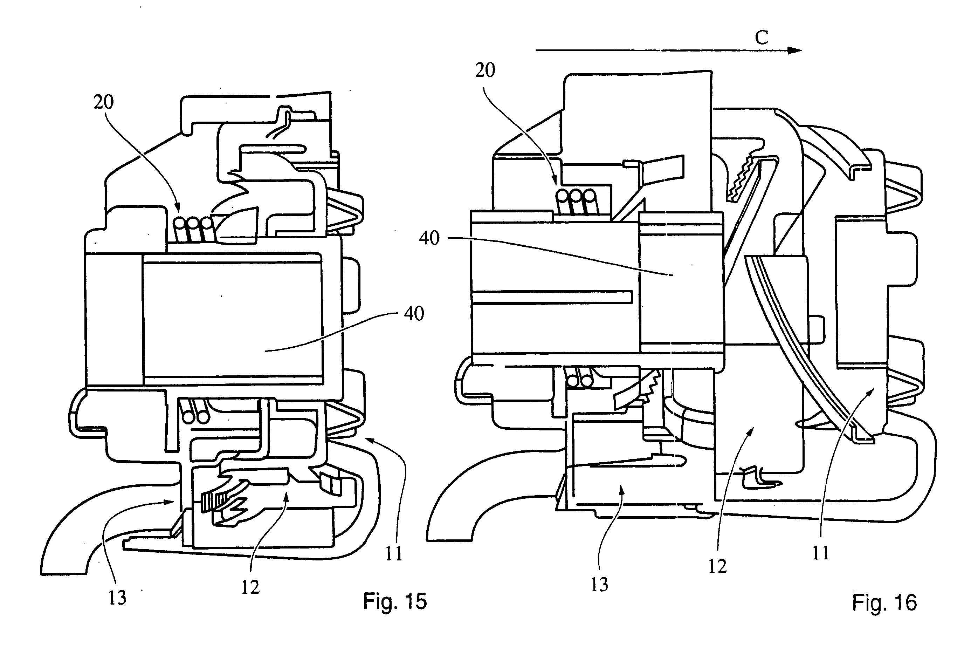

In den Figuren 3, 4, 5 sowie 15 und 16 sind schematisch verschiedene Darstellungen einer erfindungsgemäßen Kopfstütze 4 dargestellt, wobei in Figur 3 eine Explosionsdarstellung, in Figur 4 eine Schnittdarstellung, in Figur 5 eine Draufsicht mit abgenommenem ersten Teilstück sowie in den Figuren 15 und 16 weitere Schnittdarstellungen der Kopfstütze in Gebrauchsstellung (Figur 15) bzw. in Sicherheitsstellung (Figur 16) dargestellt sind. Jeweils ist das erste Teilstück 11, das dritte Teilstück 13, die als Schenkelfeder 20 ausgebildete Feder 20, ein Lagerkäfig 40, die Haltestangen 5 für die Kopfstütze 4 und das zweite Teilstück 12 mit dem Komfortteilstück 122 und dem Sicherheitsteilstück 123 dargestellt.

Aus den Figuren 3 bis 5 sowie 15 und 16 ist erkennbar, dass der Lagerkäfig 40 zwischen dem ersten Teilstück 11 und dem zweiten Teilstück 12 (bzw. zwischen dem ersten Teilstück 11 und dem Komfortteilstück 122 des ersten Teilstücks 12) angeordnet ist und dass das erste Teilstück 11 eine rohrförmige Anformung derart aufweist, dass die Außenfläche der rohrartigen Anformung als eine erste Lagerfläche 111 mit einer rohrartigen oder zylinderartigen zweiten Lagerfläche 121, insbesondere eine Innenfläche des zweiten Teilstücks 12 bzw. des Komfortteilstücks 122, bzw. mit einer entsprechenden Seite des Lagerkäfigs 40 zur Lagerung des ersten Teilstücks 11 im Sinne einer zentralen Lagerung zusammenwirkt. Die Länge der rohrförmigen Anformung bzw. die Länge der ersten Lagerfläche 111 ist erfindungsgemäß derart bemessen, dass eine ausreichend gute und leichtgängige Lagerung in allen translatorischen Einstellungen des ersten Teilstücks 11 gewährleistet ist. Insbesondere bei der Verwendung eines (nicht notwendigerweise zwingend vorgesehenen Lagerkäfigs 40) ist dieser Lagerkäfig 40 bzw. dessen Länge oder Erstreckung entlang der Drehachse 19 derart bemessen, dass bei allen translatorischen Einstellungen des ersten Teilstücks 11 eine gute Lagerung gewährleistet ist. Hierzu weist der Lagerkäfig 40 bevorzugt eine Erstreckung im Bereich der Größenordnung der Verschiebung des ersten Teilbereichs 11 zwischen der Gebrauchsstellung und der Sicherheitsstellung auf, bevorzugt im Bereich zwischen 60% und 140%, bevorzugt zwischen 80% und 12%, der Länge des maximalen Verschiebewegs auf.

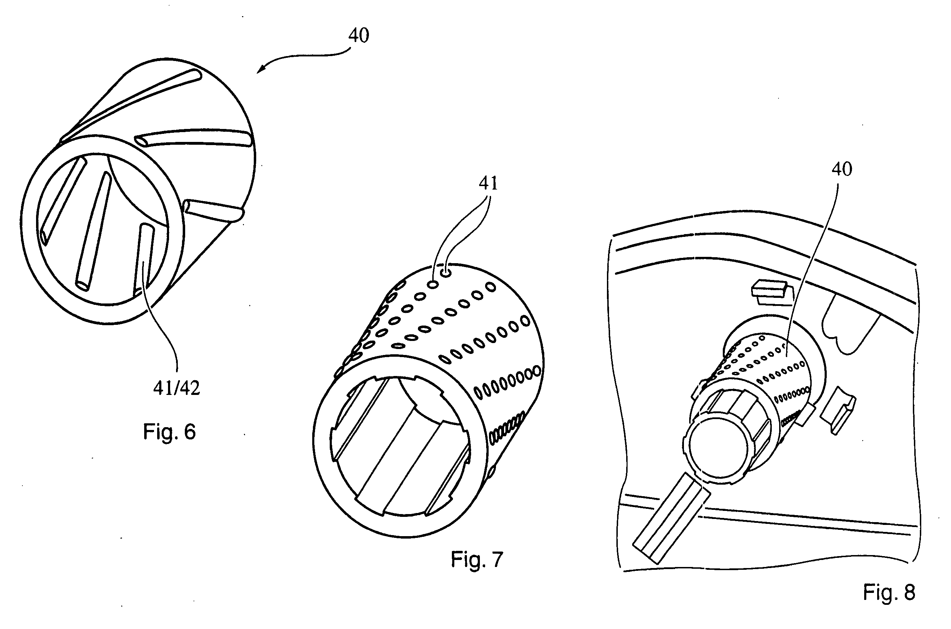

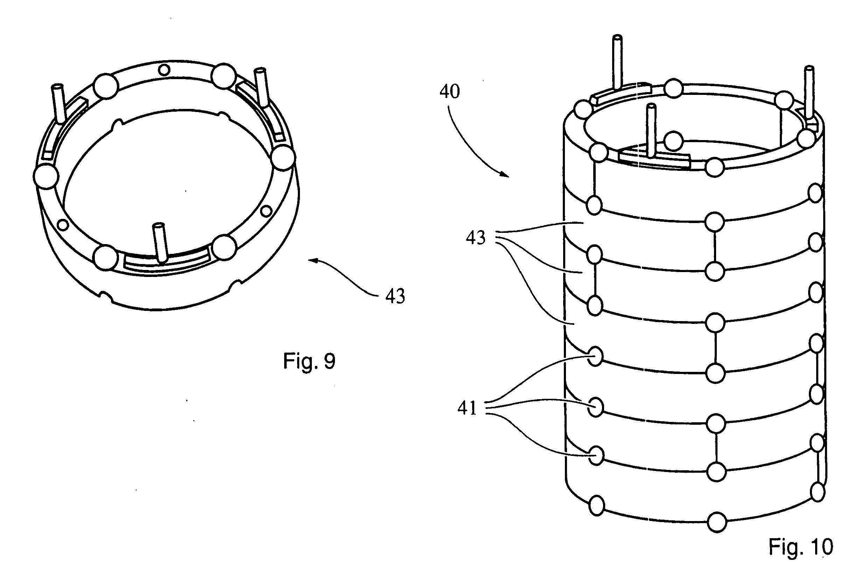

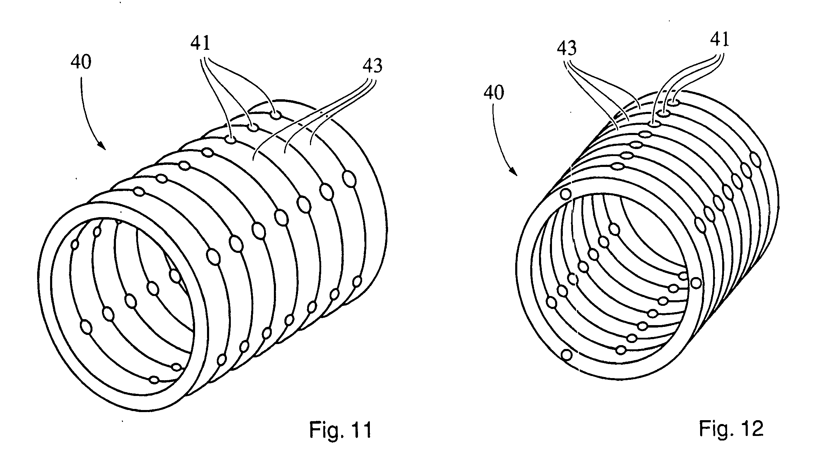

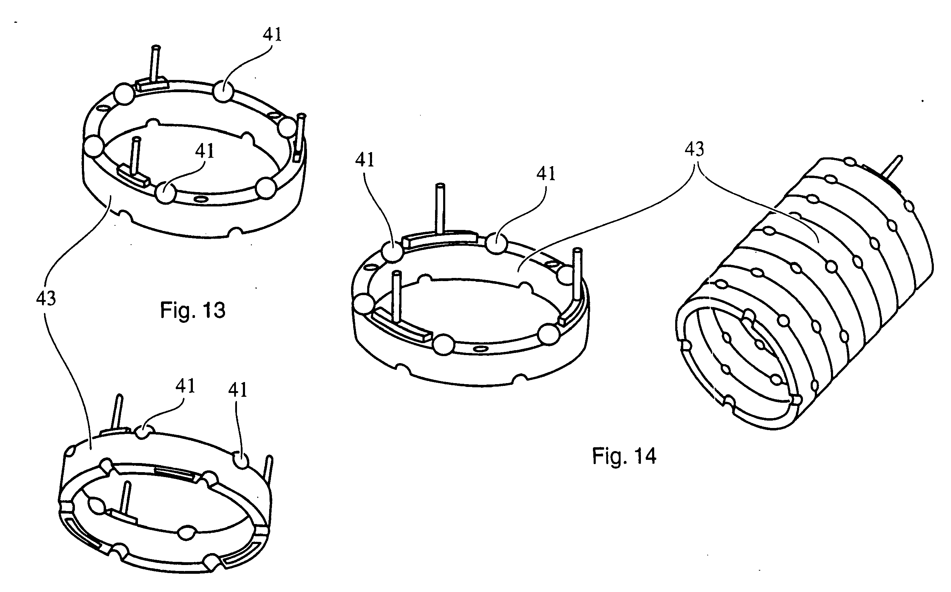

Der Lagerkäfig 40 weist erfindungsgemäß bevorzugt eine Mehrzahl von Wälzkörpern 41 auf. Unterschiedliche Beispiele für verschiedene Ausführungsformen des Lagerkäfigs 40 sind in den Figuren 6 bis 14 dargestellt. In Figur 6 ist eine Ausführungsform des im wesentlichen zylindrischen Lagerkäfigs 40 dargestellt, bei der der Lagerkäfig 40 im wesentlichen einstückig vorgesehen ist und wobei die Wälzkörper 41 im wesentlichen als Rollenwälzkörper 41 ausgebildet sind. Alternativ oder kumulativ zu dem Vorhandensein von Wälzkörpern 41 kann es bei der Ausführungsform gemäß Figur 6 auch vorgesehen sein, dass im Bereich der ersten und/oder zweiten Lagerfläche 111, 121 Gleitrippen 42 im Lagerkäfig 40 ausgebildet sind, die zu einer besonders leichtgängigen Lagerung führen. In Figur 7 ist eine Ausführungsform des Lagerkäfigs 40 dargestellt, bei der der Lagerkäfig 40 im wesentlichen ebenfalls einstückig vorgesehen ist und wobei die Wälzkörper 41 im wesentlichen als Kugelwälzkörper ausgebildet sind. In der Figur 7 und weiterhin in der Figur 8 ist dargestellt, dass die Innenseite des Lagerkäfig 40 mittels eines verkeilten Profils ausgebildet sein kann, wobei die rohrförmige Anformung des ersten Teilstücks 11 mit dem innenseitigen Profil des Lagerkäfigs 40 drehfest derart zusammenwirkt, dass die Außenseite des Lagerkäfigs 40 als erste Lagerfläche 111 aufzufassen ist. Die verkeilte Profilierung des Lagerkäfigs 40 kann alternativ dazu (jedoch nicht dargestellt) ebenfalls an der Außenseite des Lagerkäfigs vorgesehen sein. In den Figuren 9 bis 14 sind verschiedene Ausführungsformen des Lagerkäfigs 40 dargestellt, bei denen der Lagerkäfig 40 aus mehreren Teilelementen 43 aufgebaut vorgesehen ist, wobei als Teilelemente insbesondere Ringe vorgesehen sind, die die Wälzkörper 41 zwischen sich aufnehmen. Hierbei sind die Wälzkörper 41 im wesentlichen als Kugelwälzkörper ausgebildet.

### Bezugszeichenliste

| | |
|---|---|
| 1 | Fahrzeugsitz |
| 2 | Sitzteil |
| 3 | Rückenlehne |
| 4 | Kopfstütze |
| 5 | Haltestange |
| 11 | erstes Teilstück der Kopfstütze |
| 11' | erste Schrägfläche |
| 12 | zweites Teilstück der Kopfstütze |
| 12' | zweite Schrägfläche |
| 13 | drittes Teilstück der Kopfstütze |
| 13' | dritte Schrägfläche |
| 14' | vierte Schrägfläche |
| 19 | Drehachse |
| 20 | Schenkelfeder |
| 21, 22 | Angriffspunkte |
| 40 | Lagerkäfig |
| 41 | Wälzkörper |
| 42 | Gleitrippen |
| 43 | Teilelemente |
| 111 | erste Lagerfläche |
| 121 | zweite Lagerfläche |
| 122 | Komfortteilstück |
| 123 | Sicherheitsteilstück |
| Pfeil B | Drehrichtung des Hohlzylinders |
| Pfeil C | Verschiebung des Polsterkörpers |

## Patentansprüche

1. Kopfstütze (4) für einen Fahrzeugsitz (1), bei welcher zumindest ein dem Kopf des Sitzinsassen zugewandtes erstes Teilstück (11) der Kopfstütze unfallbedingt unter der Wirkung einer Relativbewegung eines im wesentlichen zwischen dem ersten Teilstück (11) und einem dritten Teilstück (13) angeordneten zweiten Teilstücks (12) der Kopfstütze aus einer Gebrauchsstellung zum Kopf des Sitzinsassen hin entlang einer Verlagerungsrichtung (C) in eine Sicherheitsstellung und/oder eine Komfortstellung verlagerbar ist, wobei die Relativbewegung der Teilstücke (11, 12, 13) eine Drehung um eine zur Verlagerungsrichtung (C) im wesentlichen parallele Drehachse (19) ist, **dadurch gekennzeichnet, dass** bei der Relativbewegung um die Drehachse (19) eine Lagerung des ersten Teilstücks (11) gegenüber dem zweiten Teilstücks (12) vorgesehen ist, wobei das erste Teilstück (11) eine erste Lagerfläche (111) und das zweite Teilstück (12) eine zweite Lagerfläche (121) aufweist.

2. Kopfstütze nach Anspruch 1, **dadurch gekennzeichnet, dass** im Bereich der ersten und zweiten Lagerfläche (111, 121) ein Wälzlager vorgesehen ist, wobei das Wälzlager insbesondere einen einen Wälzkörper aufweisenden Lagerkäfig (40) umfasst.

3. Kopfstütze nach einem der vorhergehenden Ansprüche, **dadurch gekennzeichnet, dass** der Lagerkäfig (40) entlang der Drehachse (19) eine Erstreckung in der Größenordnung der Verschiebung des ersten Teilstücks (11) zwischen der Gebrauchsstellung und der Sicherheitsstellung aufweist.

4. Kopfstütze nach einem der vorhergehenden Ansprüche, **dadurch gekennzeichnet, dass** das erste Teilstück (11) wenigstens eine erste Schrägfläche (11') und das zweite Teilstück (12) wenigstens eine zweite Schrägfläche (12') aufweist, wobei die ersten und/oder zweiten Schrägflächen (11', 12') im wesentlichen helixförmig um die Drehachse (19) verlaufen und bei einer Relativbewegung des zweiten Teilstücks (12) um die Drehachse (19) eine Bewegung des ersten Teilstücks (11) entlang der Verlagerungsrichtung (C) bewirken.

5. Kopfstütze nach einem der vorhergehenden Ansprüche, **dadurch gekennzeichnet, dass** das dritte Teilstück (13) wenigstens eine dritte Schrägfläche (13') und das zweite Teilstück (12) wenigstens eine vierte Schrägfläche (14') aufweist, wobei die dritten und/oder vierten Schrägflächen (13', 14') im wesentlichen helixförmig um die Drehachse (19) verlaufen und bei einer Relativbewegung des zweiten Teilstücks (12) um die Drehachse (19) eine Bewegung des zweiten Teilstücks (12) entlang der Verlagerungsrichtung (C) bewirken.

6. Kopfstütze nach einem der vorhergehenden Ansprüche, **dadurch gekennzeichnet, dass** die Lagerung des ersten Teilstücks (11) gegenüber dem zweiten Teilstücks (12) mittels einer Zentrallagerung vorgesehen ist, wobei die erste Lagerfläche (111) eine äußere Lagerfläche ist, wobei die zweite Lagerfläche (121) eine innere Lagerfläche ist und wobei insbesondere die erste und zweite Lagerfläche (111, 121) mit Bezug zur Drehachse (19) radial innenliegend gegenüber der ersten und zweiten Schrägfläche (11', 12') und/oder gegenüber der dritten und vierten Schrägfläche (13', 14') vorgesehen ist.

7. Kopfstütze nach einem der vorhergehenden Ansprüche, **dadurch gekennzeichnet, dass** eine beidseitige Wirkung der ersten und zweiten Schrägflächen (11', 12') und/oder eine beidseitige Wirkung der dritten und vierten Schrägflächen (13', 14') vorgesehen ist.

8. Kopfstütze nach einem der vorhergehenden Ansprüche, **dadurch gekennzeichnet, dass** eine Blockiereinrichtung zur Blockierung oder Verringerung einer Bewegung des ersten Teilstücks (11) der Kopfstütze entgegen der Verlagerungsrichtung (C) vorgesehen ist, wobei die Blockiereinrichtung eine Verzahnung im Bereich der dritten Schrägfläche (13') und der vierten Schrägfläche (14') aufweist.

9. Kopfstütze nach einem der vorhergehenden Ansprüche, **dadurch gekennzeichnet, dass** das zweite Teilstück (12) ein Komfortteilstück (122) und ein Sicherheitsteilstück (123) aufweist, wobei mittels einer Drehung des Komfortteilstücks (122) um die Drehachse (19) ausgehend von der Gebrauchsstellung oder ausgehend von einer Komfortstellung eine Bewegung des ersten Teilstücks (11) entlang der Verlagerungsrichtung (C) vorgesehen ist und wobei mittels einer Drehung des Sicherheitsteilstücks (123) um die Drehachse (19) eine zumindest teilweise Mitbewegung des Komfortteilstücks und eine Bewegung des ersten Teilstücks (11) entlang der Verlagerungsrichtung (C) vorgesehen ist.

## Claims

1. Headrest (4) for a vehicle seat (1) in which, in the event of an accident, at least one first section (11) of the headrest that is oriented towards the head of the seat occupant may be displaced, due to the effect of a relative movement of a second section (12) of the headrest that is arranged substantially between the first section (11) and a third section (13), from a working position into a safety position and/or a comfort position in the direction of the head of the seat occupant, in a direction of displacement (C), the relative movement of the sections (11, 12, 13) being a rotation about a rotational axis (19) substantially parallel to the direction of displacement (C), **characterized in that** a mounting of the first section (11) relative to the second section (12) is provided during the relative movement about the rotational axis (19), the first section (11) comprising a first bearing surface (111) and the second section (12) comprising a second bearing surface (121).

2. Headrest according to Claim 1, **characterized in that** in the region of the first and second bearing surfaces (111, 121) a rolling bearing is provided, the rolling bearing comprising, in particular, a bearing cage (40) comprising a rolling element.

3. Headrest according to one of the preceding claims, **characterized in that** the bearing cage (40) along the rotational axis (19) has a dimension in the order of magnitude of the displacement of the first section (11) between the working position and the safety position.

4. Headrest according to one of the preceding claims, **characterized in that** the first section (11) has at least one first oblique surface (11') and the second section (12) has at least one second oblique surface (12'), the first and/or second oblique surfaces (11', 12') extending substantially helically about the rotational axis (19) and, with a relative movement of the second section (12) about the rotational axis (19), effect a movement of the first section (11) in the direction of displacement (C).

5. Headrest according to one of the preceding claims, **characterized in that** the third section (13) has at least one third oblique surface (13') and the second section (12) has at least one fourth oblique surface (14'), the third and/or fourth oblique surfaces (13', 14') extending substantially helically about the rotational axis (19) and, with a relative movement of the second section (12) about the rotational axis (19), effect a movement of the second section (12) in the direction of displacement (C).

6. Headrest according to one of the preceding claims, **characterized in that** the mounting of the first section (11) relative to the second section (12) is provided by means of a central mounting, the first bearing surface (111) being an external bearing surface, the second bearing surface (121) being an internal bearing surface and, in particular, the first and second bearing surface (111, 121) relative to the rotational axis (19) being provided located radially on the inside relative to the first and second oblique surfaces (11', 12') and/or relative to the third and fourth oblique surfaces (13', 14').

7. Headrest according to one of the preceding claims, **characterized in that** the first and second oblique surfaces (11', 12') act on both sides and/or the third and fourth oblique surfaces (13', 14') act on both sides.

8. Headrest according to one of the preceding claims, **characterized in that** a blocking device is provided for blocking or reducing a movement of the first section (11) of the headrest counter to the direction of displacement (C), the blocking device comprising teeth in the region of the third oblique surface (13') and the fourth oblique surface (14').

9. Headrest according to one of the preceding claims, **characterized in that** the second section (12) has a comfort section (122) and a safety section (123), by means of a rotation of the comfort section (122) about the rotational axis (19), starting from the working position or starting from a comfort position, a movement of the first section (11) being provided in the direction of displacement (C), and by means of a rotation of the safety section (123) about the rotational axis (19) an at least partially combined movement of the comfort section and a movement of the first section (11) being provided in the direction of displacement (C).

## Revendications

1. Appui-tête (4) pour un siège de véhicule (1), dans lequel au moins une première pièce partielle (11) de l'appui-tête, tournée vers la tête de l'occupant du siège, peut être déplacée, de manière provoquée par un accident, sous l'effet d'un mouvement relatif d'une deuxième pièce partielle (12) de l'appui-tête, disposée essentiellement entre la première pièce partielle (11) et une troisième pièce partielle (13), à partir d'une position d'utilisation en direction de la tête de l'occupant du siège le long d'une direction de déplacement (C) jusqu'à une position de sécurité et/ou une position de confort, le mouvement relatif des pièces partielles (11, 12, 13) étant une rotation autour d'un axe de rotation (19) essentiellement parallèle à la direction de déplacement (C), **caractérisé en ce qu'**un support sur palier de la première pièce partielle (11) par rapport à la deuxième pièce partielle (12) est prévu lors du mouvement relatif autour de l'axe de rotation (19), la première pièce partielle (11) comprenant une première surface de palier (111) et la deuxième pièce partielle (12) comprenant une deuxième surface de palier (121).

2. Appui-tête selon la revendication 1, **caractérisé en ce qu'**un palier à roulement est prévu dans la région des première et deuxième surfaces de palier (111, 121), le palier à roulement comportant en particulier une cage de palier (40) comprenant un corps de roulement.

3. Appui-tête selon l'une quelconque des revendications précédentes, **caractérisé en ce que** la cage de palier (40) présente le long de l'axe de rotation (19) une étendue de l'ordre de grandeur du déplacement de la première pièce partielle (11) entre la position d'utilisation et la position de sécurité.

4. Appui-tête selon l'une quelconque des revendications précédentes, **caractérisé en ce que** la première pièce partielle (11) comprend au moins une première surface oblique (11') et la deuxième pièce partielle (12) comprend au moins une deuxième surface oblique (12'), les première et/ou deuxième surfaces obliques (11', 12') s'étendant essentiellement en forme d'hélice autour de l'axe de rotation (19) et, lors d'un mouvement relatif de la deuxième pièce partielle (12) autour de l'axe de rotation (19), provoquant un mouvement de la première pièce partielle (11) le long de la direction de déplacement (C).

5. Appui-tête selon l'une quelconque des revendications précédentes, **caractérisé en ce que** la troisième pièce partielle (13) comprend au moins une troisième surface oblique (13') et la deuxième pièce partielle (12) comprend au moins une quatrième surface oblique (14'), les troisième et/ou quatrième surfaces obliques (13', 14') s'étendant essentiellement en forme d'hélice autour de l'axe de rotation (19) et, lors d'un mouvement relatif de la deuxième pièce partielle (12) autour de l'axe de rotation (19), provoquant un mouvement de la deuxième pièce partielle (12) le long de la direction de déplacement (C).

6. Appui-tête selon l'une quelconque des revendications précédentes, **caractérisé en ce que** le support sur palier de la première pièce partielle (11) par rapport à la deuxième pièce partielle (12) est prévu au moyen d'un support sur palier central, la première surface de palier (111) étant une surface de palier extérieure, la deuxième surface de palier (121) étant une surface de palier intérieure et en particulier les première et deuxième surfaces de palier (111, 121) étant prévues, par rapport à l'axe de rotation (19), radialement à l'intérieur par rapport aux première et deuxième surfaces obliques (11', 12') et/ou par rapport aux troisième et quatrième surfaces obliques (13', 14').

7. Appui-tête selon l'une quelconque des revendications précédentes, **caractérisé en ce qu'**une action bilatérale des première et deuxième surfaces obliques (11', 12') et/ou une action bilatérale des troisième et quatrième surfaces obliques (13', 14') sont prévues.

8. Appui-tête selon l'une quelconque des revendications précédentes, **caractérisé en ce qu'**il est prévu un dispositif de blocage pour le blocage ou la réduction d'un mouvement de la première pièce partielle (11) de l'appui-tête en sens inverse de la direction de déplacement (C), le dispositif de blocage comprenant une denture dans la région de la troisième surface oblique (13') et de la quatrième surface oblique (14').

9. Appui-tête selon l'une quelconque des revendications précédentes, **caractérisé en ce que** la deuxième pièce partielle (12) comprend une pièce partielle de confort (122) et une pièce partielle de sécurité (123), un mouvement de la première pièce partielle (11) le long de la direction de déplacement (C) étant prévu au moyen d'une rotation de la pièce partielle de confort (122) autour de l'axe de rotation (19) à partir de la position d'utilisation ou à partir d'une position de confort, et un mouvement au moins partiellement conjoint de la pièce partielle de confort ainsi qu'un mouvement de la première pièce partielle (11) le long de la direction de déplacement (C) étant prévus au moyen d'une rotation de la pièce partielle de sécurité (123) autour de l'axe de rotation (19).
